# EUROPEAN PATENT APPLICATION

(11) **EP 2 040 321 A1**
(43) Date of publication of application: **25.03.2009**
(21) Application number: 08164492.4
(22) Date of filing: 17.09.2008
(51) Int. Cl.: H01M 4/86, H01M 10/40, H01M 4/58

(54) **Electric Storage Device**

(30) Priority: 18.09.2007 JP 2007240985
(71) Applicant: FUJI JUGOGYO K.K., Shinjuku-ku Tokyo (JP)
(72) Inventor: Ando, Nobuo c/o Fuji Jukogyo K. K., Tokyo 160-8316 (JP); Kojima, Kenji c/o Fuji Jukogyo K. K., Tokyo 160-8316 (JP); Hatou, Yukinori c/o Fuji Julogyo K. K., Tokyo 160-8316 (JP)
(74) Representative: Sajda, Wolf E.

(57) **Abstract**

A negative electrode (15) includes a negative-electrode current collector (16) provided with a large number of through-holes (16a) and a negative-electrode mixture layer (17) applied thereon. Positive electrodes (13) and (14) are arranged so as to sandwich the negative electrode (15). A thin positive-electrode mixture layer (20) having a high output characteristic is provided to the positive electrode (13), and a thick positive-electrode mixture layer (22) having a high capacity is provided to the other positive electrode (14). Since these positive electrodes (13) and (14) having different charging/discharging characteristics are provided, the energy density and the output density can be enhanced. Ions can move between the positive-electrode mixture layers (20) and (22) via the through-holes (16a) of the negative-electrode current collector (16), whereby a variation in the potential of the positive electrodes (13) and (14) can be canceled. Therefore, the durability of the electric storage device (10) can be ensured.

## Description

### BACKGROUND OF THE INVENTION

### 1. Field of the Invention

The present invention relates to a technology that is well adaptable to an electric storage device including plural positive electrodes.

### 2. Description of the Related Arts

High energy density and high output density are required for an electric storage device that is mounted to an electric vehicle, a hybrid vehicle, or the like. Therefore, a lithium ion secondary battery, an electric double layer capacitor, etc. have been nominated as a candidate for such an electric storage device. However, a lithium ion secondary battery has a high energy density, but only a low output density. An electric double layer capacitor has a high output density, but low energy density.

In view of this, there has been proposed an electric storage device called a hybrid capacitor in which the electric storage principles of a lithium ion secondary battery and those of an electric double layer capacitor are combined. The hybrid capacitor employs activated carbon, which is used for an electric double layer capacitor, for a positive electrode so as to accumulate charges by utilizing the electric double layer in the positive electrode, and employs a carbon material, which is used for a lithium ion secondary battery, for a negative electrode, and lithium ions are doped into the carbon material of the negative electrode so as to accumulate charges.

The application of the electric storage mechanism described above makes it possible to enhance the output density and the energy density. However, a further improvement in the output density and the energy density has been demanded in order to use the electric storage mechanism described above for a vehicle power source.

Methods for enhancing both an output density and an energy density of a battery include the one in which an internal resistance is decreased by coating an electrode mixture material to be thin, and the one in which a battery having a high energy density and a capacitor having a high output density are connected in parallel in order to supply large electric current from the capacitor.

However, the former method, where the electrode mixture material is coated to be thin, entails a reduction in the energy density of the electric storage device, and makes the assembly difficult to thereby increase cost of the electric storage device. In the latter method, the battery and the capacitor are combined which entails increased cost of the electric storage device due to a complicated control circuit.

In order to solve these problems, there has been proposed an electric storage device in which positive-electrode current collectors of a lithium ion secondary battery and those of an electric double layer capacitor are connected to each other, and negative-electrode current collectors of the lithium ion secondary battery and those of the electric double layer capacitor are connected to each other (e.g., see JP-A-2001-351 688).

Furthermore, an electric storage device has been proposed in which a mixture material including active carbon or the like and a mixture material including lithium cobalt oxide or the like are double-layer coated on a single current collector (e.g., see JP-A-2000-36 325 and JP-A-2005-203 131), or an electric storage device has been proposed in which a mixture material having mixed therein active carbon and lithium cobalt oxide is coated on a single current collector (e.g., see International Publication WO2002/41420).

However, in the electric storage device disclosed in JP-A-2001-351 688, it is difficult to cancel the deviation in the potential between the electrodes that are connected to each other. Therefore, overdischarging or overcharging of the lithium ion secondary battery or the electric double layer capacitor can occur. The occurrence of overdischarging or overcharging described above causes a deterioration in the durability of the electric storage device.

In the electric storage devices disclosed in JP-A-2000-36 325, JP-A-2005-203 131, and International Publication WO2002/41420, it is difficult to ensure the output density by sufficiently reducing the internal resistance, since active carbon and lithium cobalt oxide are mixed or they are coated with a double-layer structure. Further, the electric storage devices have a structure in which the lithium cobalt oxide is in contact with the active carbon. Therefore, the effect caused by the deteriorated lithium cobalt oxide also affects the active carbon, which deteriorates the durability of the electric storage device.

### SUMMARY OF THE INVENTION

An object of the present invention is to enhance the energy density and the output density of an electric storage device without deteriorating the durability of the electric storage device.

An electric storage device according to the present invention has a positive electrode system including a positive electrode having a current collector and a positive-electrode mixture layer, and a negative electrode system including a negative electrode having a current collector and a negative-electrode mixture layer.

The positive electrode system includes a first positive-electrode mixture layer and a second positive-electrode mixture layer. The mixture layers are connected to each other and which have a different thickness respectively. A through-hole is formed in the current collector arranged between the first positive-electrode mixture layer and the second positive-electrode mixture layer.

In the electric storage device according to the present invention, the first positive-electrode mixture layer and the second positive-electrode mixture layer are electrically connected to each other for moving ions between the first positive-electrode mixture layer and the second positive-electrode mixture layer via the through-hole.

In the electric storage device according to the present invention, the first positive-electrode mixture layer and the second positive-electrode mixture layer are made of same materials.

In the electric storage device according to the present invention, both of the first positive-electrode mixture layer and the second positive-electrode mixture layer contain active carbon.

In the electric storage device according to the present invention, the positive electrode system includes a first positive electrode and a second positive electrode that sandwich the negative electrode, wherein the through-hole is formed in the current collector of the negative electrode arranged between the first positive-electrode mixture layer of the first positive electrode and the second positive-electrode mixture layer of the second positive electrode.

In the electric storage device according to the present invention, the negative electrode system includes a first negative electrode and a second negative electrode that sandwich the positive electrode, wherein the though-hole is formed in the current collector of the positive electrode having the first positive-electrode mixture layer on its one surface and the second positive-electrode mixture layer on its other surface.

The electric storage device according to the present invention has a lithium ion source that is in contact with at least either one of the negative electrode and the positive electrode. Lithium ions are doped from the lithium ion source into at least either one of the negative electrode and the positive electrode.

The electric storage device according to the present invention has a device structure of a laminate type in which the positive electrode and the negative electrode are alternately laminated, or a device structure of a wound type in which the positive electrode and the negative electrode are laminated and wound.

In the electric storage device according to the present invention, the negative-electrode mixture layer contains a polyacene-based organic semiconductor, which is a heat-treated material of an aromatic condensation polymer and has a polyacene skeletal structure in which a ratio of a number of hydrogen atoms to a number of carbon atoms is 0.05 or more and 0.50 or less, graphite, or hard carbon (non-graphitizable carbon).

According to the present invention, since the first positive-electrode mixture layer and the second positive-electrode mixture layer, each having a different thickness, are combined for use, the energy density and the output density of the electric storage device can be enhanced. Further, since the through-hole is formed in the current collector arranged between the first positive-electrode mixture layer and the second positive-electrode mixture layer, ions can move between the first positive-electrode mixture layer and the second positive-electrode mixture layer.

Accordingly, even if the first positive-electrode mixture layer and the second positive-electrode mixture layer, each having a different thickness, are combined, the variation in the potential between the first positive-electrode mixture layer and the second positive-electrode mixture layer can be canceled, whereby the durability of the electric storage device can be ensured.

### BRIEF DESCRIPTION OF THE DRAWINGS

- FIG. 1: is a sectional view schematically showing an internal structure of an electric storage device according to an embodiment of the present invention;
- FIG. 2: is an explanatory view showing a discharge operation of the electric storage device;
- FIG. 3: is an explanatory view showing a discharge operation of the electric storage device;
- FIG. 4: is an explanatory view showing a discharge operation of the electric storage device;
- FIGS. 5A to 5C: are imaginary views showing a transfer state of energy in the electric storage device;
- FIG. 6: is a chart schematically showing a discharge characteristic of the electric storage device;
- FIG. 7: is a sectional view schematically showing an internal structure of an electric storage device according to another embodiment of the present invention;
- FIG. 8: is a sectional view schematically showing an internal structure of an electric storage device of a laminate type according to a further embodiment of the present invention; and
- FIG. 9: is a sectional view schematically showing an internal structure of an electric storage device of a wound type according to still another embodiment of the present invention.

### DETAILED DESCRIPTION OF THE PREFERRED EMBODIMENTS

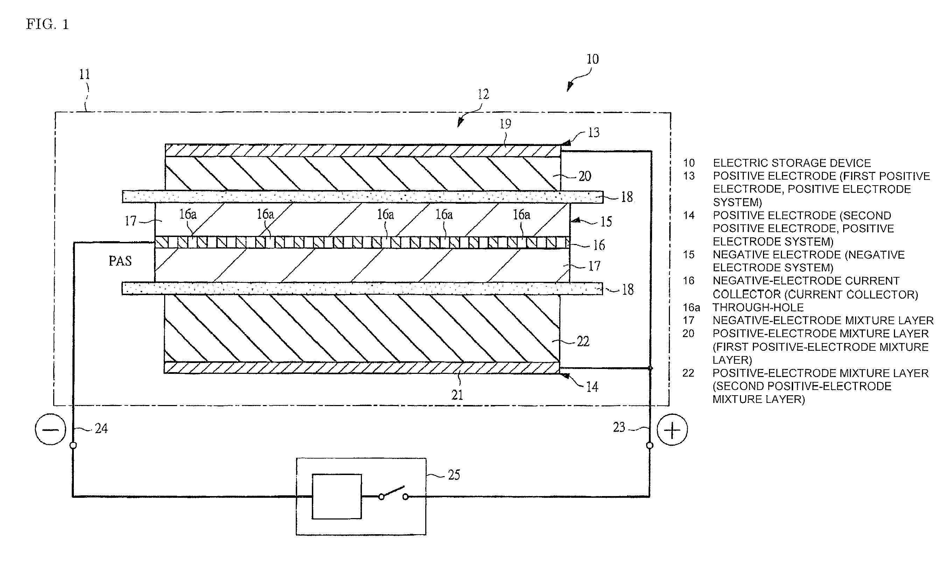

FIG. 1 is a sectional view schematically showing an internal structure of an electric storage device 10 according to a first embodiment of the present invention. As shown in FIG. 1, an electrode laminate unit 12 is arranged at the inside of a laminate film 11 constituting an outer casing of the electric storage device 10. The electrode laminate unit 12 includes a positive electrode system having two positive electrodes 13 and 14, and a negative electrode system having a single negative electrode 15. An electrolyte made of an aprotic organic solvent containing a lithium salt is injected into the laminate film 11 that is sealed by a thermal welding.

The negative electrode 15 arranged at the center of the electrode laminate unit 12 has a negative-electrode current collector (current collector) 16 provided with a large number of through-holes 16a, and negative-electrode mixture layers 17 mounted on both surfaces of the negative-electrode current collector 16. A first positive electrode 13 and a second positive electrode 14 are arranged with separators 18 therebetween so as to sandwich the negative electrode 15.

The positive electrode 13 includes a positive-electrode current collector (current collector) 19 and a first positive-electrode mixture layer 20, while the other positive electrode 14 includes a positive-electrode current collector (current collector) 21 and a second positive-electrode mixture layer 22 that is thicker than the positive-electrode mixture layer 20. A positive electrode terminal 23 is connected to the pair of the positive-electrode current collectors 19 and 21 that are connected to each other, while a negative electrode terminal 24 is connected to the negative-electrode current collector 16.

Specifically, in the illustrated electric storage device 10, an electric storage component including the positive-electrode mixture layer 20 and the negative-electrode mixture layer 17 opposite to the positive-electrode mixture layer 20 and an electric storage component including the positive-electrode mixture layer 22 and the negative-electrode mixture layer 17 opposite to the positive-electrode mixture layer 22 are connected in parallel.

A charge/discharge tester 25 that controls the electric storage device 10 in a charging state or discharging state is connected to the positive-electrode terminal 23 and the negative-electrode terminal 24.

The positive-electrode mixture layers 20 and 22 of the positive electrodes 13 and 14 contain active carbon as a positive-electrode active material, which allows lithium ions to be reversibly doped thereinto and de-doped therefrom (hereinafter referred to as dope and de-dope).

As described above, the positive-electrode mixture layers 20 and 22 contain the same positive-electrode active material, but the positive-electrode mixture layer 20 that is formed to be thin has a high output characteristic, while the positive-electrode mixture layer 22 formed to be thick has a high capacity characteristic. The negative-electrode mixture layer 17 of the negative electrode 15 contains a polyacene-based organic semiconductor (PAS) as a negative-electrode active material, which allows lithium ions to be reversibly doped thereinto and de-doped therefrom.

Lithium ions are doped beforehand into the negative electrode 15 from a lithium ion source such as a metal lithium or the like, by which a potential of the negative electrode is decreased to enhance the energy density. The negative electrode 15 has an electrode area larger than that of the positive electrodes 13 and 14, by which the deposition of the metal lithium on the negative electrode 15 is prevented.

In the specification of the present invention, the term "doping (dope)" involves "occlude", "carry", "adsorb" or "insert", and specifically a phenomenon where lithium ions and/or anions enter the positive-electrode active material or the negative-electrode active material. The term "de-doping (de-dope)" involves "release" and "desorb", and specifically a phenomenon where lithium ions or anions desorb from the positive-electrode active material or the negative-electrode active material.

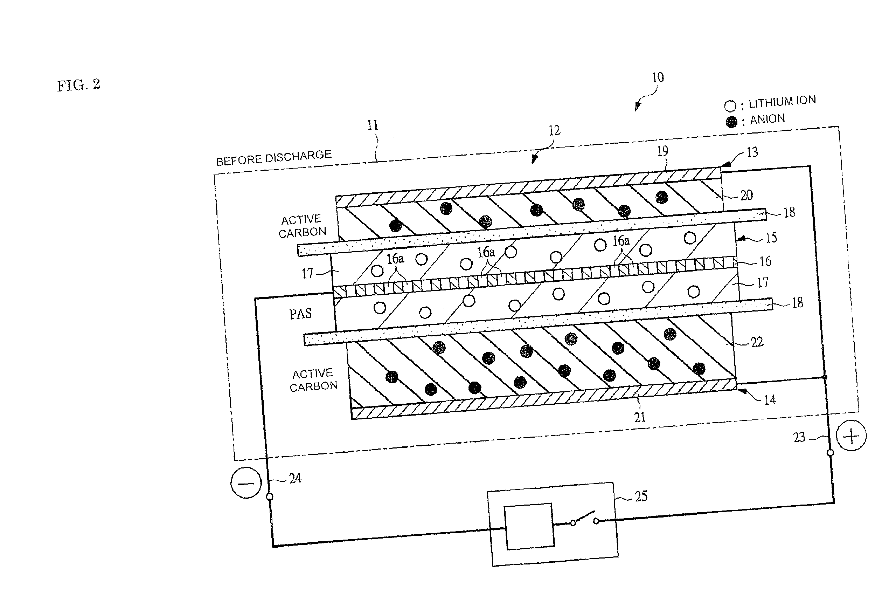

Subsequently explained is a discharge operation of the electric storage device 10 having such a structure. FIGS. 2 to 4 are explanatory views showing the discharge operation of the electric storage device 10. As shown in FIG. 2, when the electric storage device 10 is charged by actuating the charge/discharge tester 25, anions are doped into the positive-electrode mixture layers 20 and 22 of the positive electrodes 13 and 14, and lithium ions are doped into the negative-electrode mixture layer 17 of the negative electrode 15.

Since the positive-electrode mixture layer 22 is formed to be thicker than the positive-electrode mixture layer 20, anions are doped more into the positive-electrode mixture layer 22 than into the positive-electrode mixture layer 20.

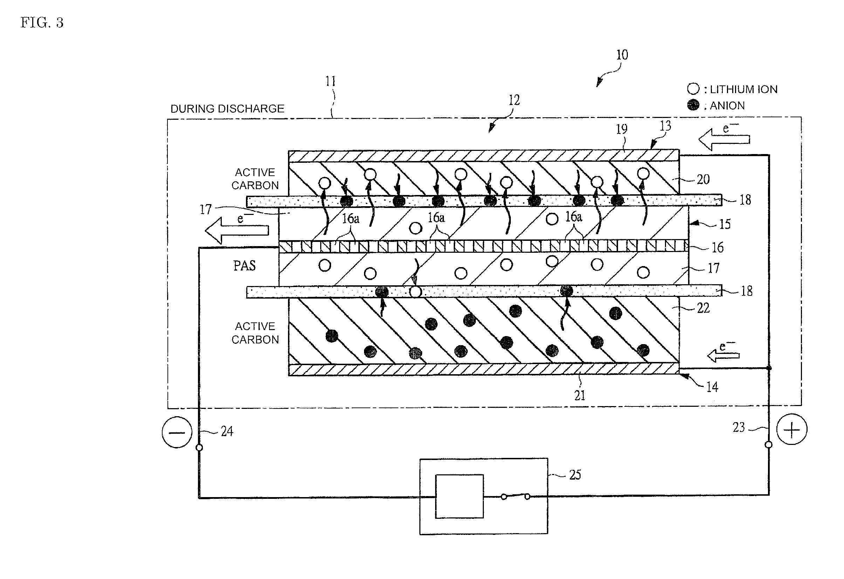

Next, as shown in FIG. 3, when the electric storage device 10 is discharged by actuating the charge/discharge tester 25, lithium ions are de-doped from the negative-electrode mixture layer 17 of the negative electrode 15, and anions are de-doped from the positive-electrode mixture layers 20 and 22 of the positive electrodes 13 and 14. After all the anions are de-doped, lithium ions are further doped into the positive-electrode mixture layers 20 and 22.

Since the positive-electrode mixture layer 20 is formed to be thinner than the positive-electrode mixture layer 22 so as to have a low resistance, electrons more easily move to the positive-electrode mixture layer 20 than to the positive-electrode mixture layer 22, whereby a high current flows more from the positive-electrode mixture layer 20 than from the positive-electrode mixture layer 22 during the discharging.

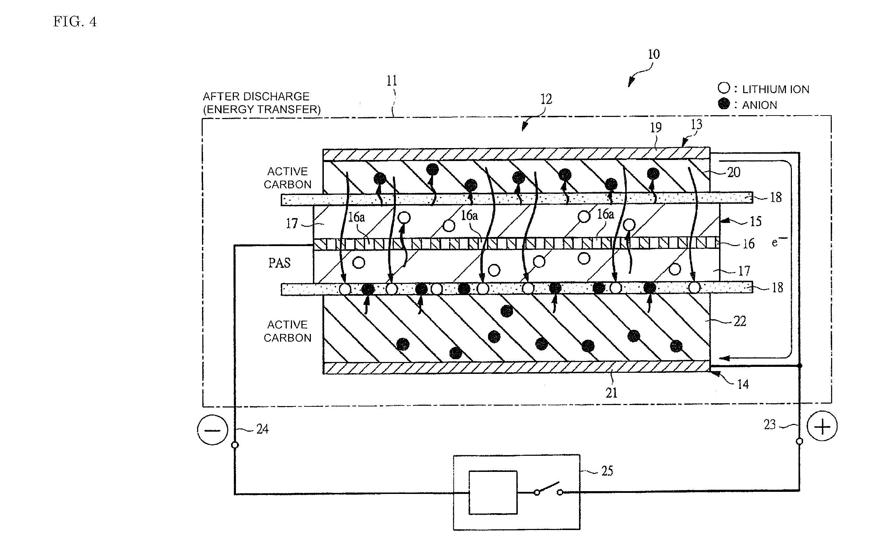

As shown in FIG. 4, the positive-electrode mixture layer 20 and the positive-electrode mixture layer 22 are electrically connected, and a large number of through-holes 16a are formed in the negative-electrode current collector 16 arranged between the positive-electrode mixture layer 20 and the positive-electrode mixture layer 22.

Therefore, the lithium ions (ions) of the positive-electrode mixture layer 20 move to the positive-electrode mixture layer 22 after the discharging, whereby the anions can be de-doped from the positive-electrode mixture layer 22 and the anions can be doped into the positive-electrode mixture layer 20.

Specifically, during the discharging, a lot of anions are de-doped from and lithium ions are doped into the positive-electrode mixture layer 20 having a low resistance, and a small amount of anions are de-doped from the positive-electrode mixture layer 22 having a high resistance.

When a high current flows from the positive-electrode mixture layer 20 having a low resistance as described above, the potential of the positive-electrode mixture layer 20 is temporarily less than the potential of the positive-electrode mixture layer 22.

However, since the positive-electrode mixture layers 20 and 22 are connected to each other, and the through-holes 16a are formed in the negative-electrode current collector 16, the lithium ions of the positive-electrode mixture layer 20 gradually move to the positive-electrode mixture layer 22 until the potential reaches an equilibrium potential.

Accordingly, even if a potential difference (variation in the amount of doped ions) are occurred between the positive-electrode mixture layer 20 and the positive-electrode mixture layer 22, the potential difference can be canceled by moving the lithium ions between the positive-electrode mixture layers 20 and 22. FIGS. 2 to 4 are imaginary views, wherein the number and the balance of the anions and lithium ions are not considered.

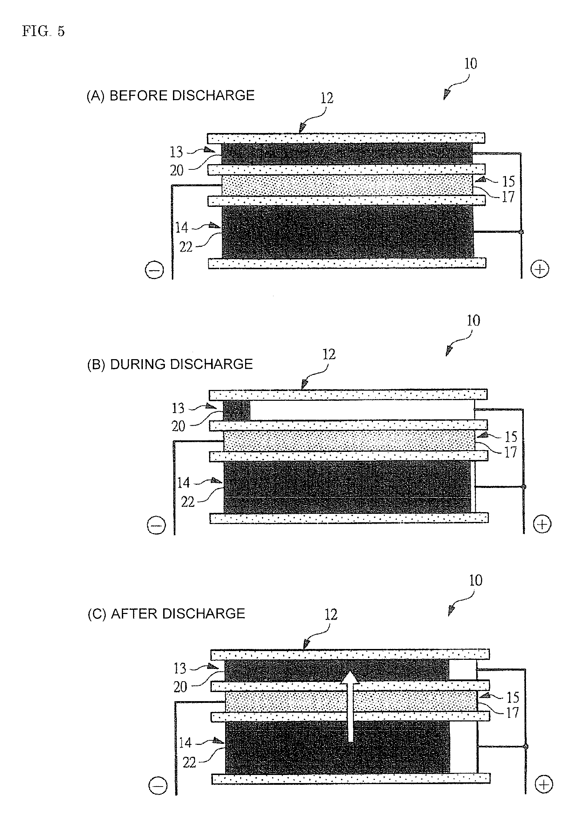

FIGS. 5A to 5C are imaginary views showing the energy transfer condition between the positive electrodes during the discharging. In FIGS. 5A to 5C, the change in the potential is illustrated in the lateral direction, while the energy amount is illustrated with the colored area.

Firstly, as shown in FIGS. 5A and 5B, during the discharging, energy is discharged with high current from the thin positive-electrode mixture layer 20, while energy is discharged with low current from the thick positive-electrode mixture layer 22. Then, as shown in FIG. 5C, after the discharging, the energy of the positive-electrode mixture layer 22 is transferred to the positive-electrode mixture layer 20 until the potential of the positive-electrode mixture layer 22 reaches an equilibrium potential.

As described above, high-current discharging can be performed by utilizing the high output characteristic of the positive-electrode mixture layer 20, and further, energy can be supplemented to the positive-electrode mixture layer 20 from the positive-electrode mixture layer 22, with the result that the potential of the positive-electrode mixture layer 20, which is temporarily decreased, can be recovered. By virtue of this, the increased output and the increased capacity of the electric storage device 10 can be achieved.

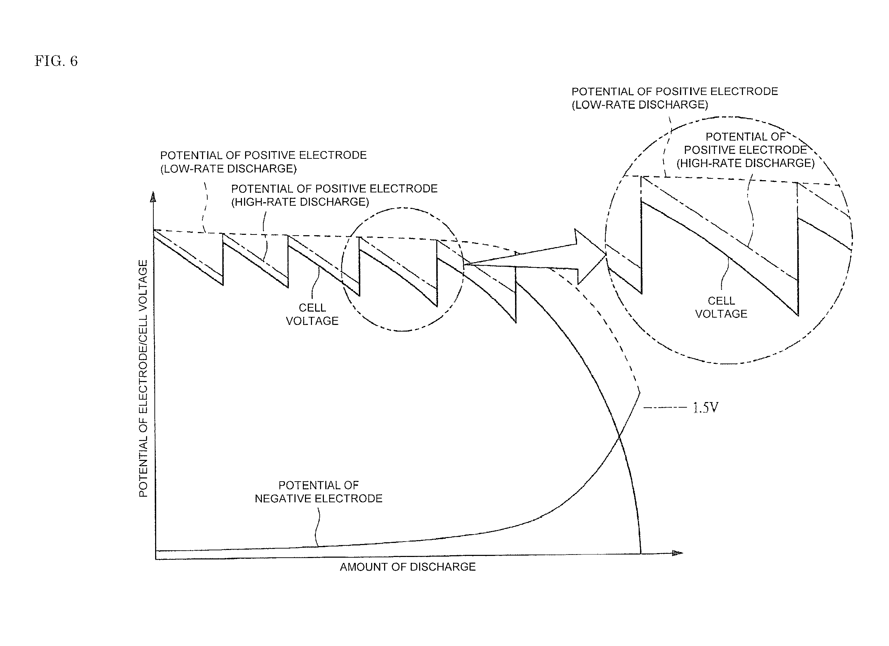

FIG. 6 is a chart schematically showing a discharge characteristic of the electric storage device 10. As shown in FIG. 6, even when a high-current discharge (high-rate discharge) is performed by utilizing the high output characteristic of the thin positive-electrode mixture layer 20, anions and/or lithium ions can move between the thin positive-electrode mixture layer 20 and the thick positive-electrode mixture layer 22, since the through-holes 16a are formed in the negative-electrode current collector 16.

Therefore, the potential of the positive-electrode mixture layer 20, which is temporarily decreased, can be recovered. Thus, the large energy of the positive-electrode mixture layer 22 can also be discharged from the positive-electrode mixture layer 20 having a high output characteristic, whereby the output can be increased while keeping the energy density of the electric storage device 10 at a high level.

In the Example shown in FIG. 6, the amount of the active material is set such that the potential of the positive electrode becomes not less than 1.5 V (for Li/Li⁺) even when a low-current discharge (a low-rate discharge) is performed until the cell voltage becomes 0 V, so that the deterioration of the positive electrodes 13 and 14 can be suppressed.

As explained above, the electric storage device 10 according to the first embodiment of the present invention includes the positive-electrode mixture layer 20 and the positive-electrode mixture layer 22, each having a different charging/discharging characteristic, i.e., each having a different thickness, wherein the positive-electrode mixture layer 20 and the positive-electrode mixture layer 22 are connected to each other, and the through-holes 16a are formed in the negative-electrode current collector 16 arranged between the positive-electrode mixture layer 20 and the positive-electrode mixture layer 22.

With this structure, even when a difference in potential is produced between the positive-electrode mixture layer 20 and the positive-electrode mixture layer 22 due to the difference in the charging/discharging characteristic, anions and/or lithium ions can move between the positive-electrode mixture layer 20 and the positive-electrode mixture layer 22, whereby the difference in the potential between the positive-electrode mixture layer 20 and the positive-electrode mixture layer 22 can be canceled.

Accordingly, the charging/discharging characteristic of the positive-electrode mixture layer 20 and the charging/discharging characteristic of the positive-electrode mixture layer 22 can be combined to be utilized without applying a high load on the positive-electrode mixture layer 20 and the positive-electrode mixture layer 22. Consequently, the output density and the energy density of the electric storage device 10 can be enhanced, while ensuring the durability of the electric storage device 10.

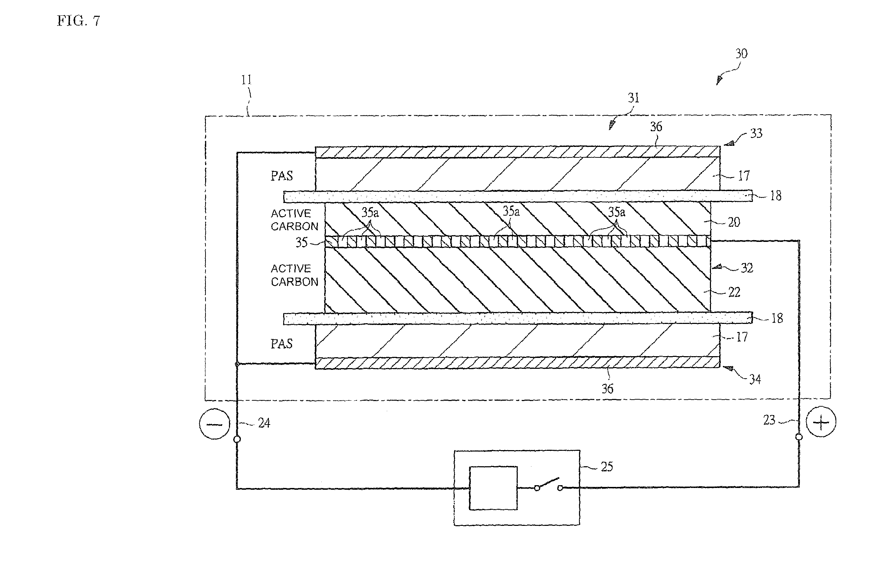

Next, another embodiment of the present invention will be explained. FIG. 7 is a sectional view schematically showing an internal structure of an electric storage device 30 according to another embodiment of the present invention. The same components as those shown in FIG. 1 are identified by the same numerals, and detailed explanations thereof are omitted. As shown in FIG. 7, an electrode laminate unit 31 is arranged at the inside of a laminate film 11 constituting an outer casing of the electric storage device 30. This electrode laminate unit 31 includes a positive electrode system having one positive electrode 32 and a negative electrode system having two negative electrodes 33 and 34.

The positive electrode 32 arranged at the center of the electrode laminate unit 31 has a positive-electrode current collector (current collector) 35 provided with a large number of through-holes 35a, the first positive-electrode mixture layer 20 mounted on one surface of the positive-electrode current collector 35 and the second positive-electrode mixture layer 22 mounted on the other surface of the positive-electrode current collector 35 and formed to be thicker than the positive-electrode mixture layer 20.

A first negative electrode 33 and a second negative electrode 34 are arranged with the separators 18 therebetween so as to sandwich the positive electrode 32. Each of the negative electrodes 33 and 34 includes a negative-electrode current collector (current collector) 36 and the negative-electrode mixture layer 17.

Like the electric storage device 10 described above, the positive-electrode mixture layers 20 and 22 of the positive electrode 32 contain active carbon as a positive-electrode active material, and the negative-electrode mixture layers 17 of the negative electrodes 33 and 34 contain PAS as a negative-electrode active material. The positive electrode terminal 23 is connected to the positive-electrode current collector 35 that connects the first positive-electrode mixture layer 20 and the second positive-electrode mixture layer 22, while the negative electrode terminal 24 is connected to the pair of the negative-electrode current collectors 36 that are connected to each other.

Specifically, in the illustrated electric storage device 30, an electric storage component including the positive-electrode mixture layer 20 and the negative-electrode mixture layer 17 opposite to the positive-electrode mixture layer 20 and an electric storage component including the positive-electrode mixture layer 22 and the negative-electrode mixture layer 17 opposite to the positive-electrode mixture layer 22 are connected in parallel.

As described above, the positive-electrode mixture layer 20 and the positive-electrode mixture layer 22, each having a different thickness, are electrically connected, and a large number of the through-holes 35a are formed in the positive-electrode current collector 35 arranged between the positive-electrode mixture layer 20 and the positive-electrode mixture layer 22, whereby anions and/or lithium ions can move between the positive-electrode mixture layer 20 and the positive-electrode mixture layer 22, like the electric storage device 10.

Consequently, the output density and the energy density of the electric storage device 30 can be enhanced, while ensuring the durability of the electric storage device 30. Further, the positive-electrode mixture layer 20 and the positive-electrode mixture layer 22 are arranged to be adjacent to each other with the positive-electrode current collector 35 interposed therebetween. Therefore, anions and/or lithium ions can move quickly.

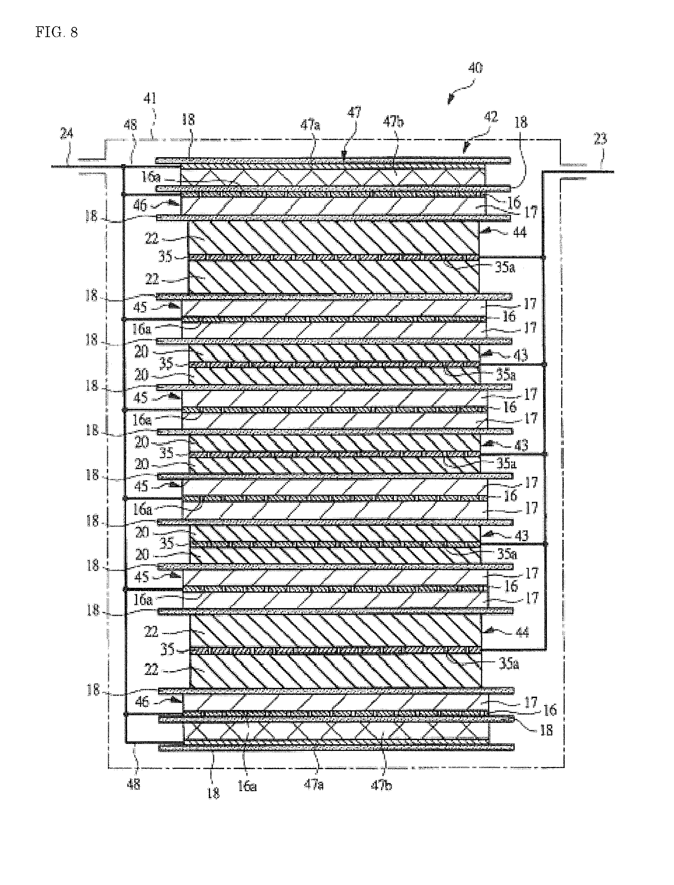

Next, another embodiment of the present invention will be explained. FIG. 8 is a sectional view schematically showing an internal structure of an electric storage device 40 of a laminate type according to another embodiment of the present invention. The same components as those shown in FIG. 1 and FIG. 7 are identified by the same numerals, and detailed explanations thereof are omitted.

As shown in FIG. 8, an electrode laminate unit 42 is arranged at the inside of a laminate film 41 constituting an outer casing of the electric storage device 40. This electrode laminate unit 42 includes a positive electrode system having positive electrodes 43 and 44 the number of which is five in total and a negative electrode system having negative electrodes 45 and 46 the number of which is six in total.

The positive electrode system has first positive electrodes 43 including the positive-electrode current collector 35 provided with a large number of the through-holes 35a, and the first positive-electrode mixture layers 20 mounted on both surfaces of the positive-electrode current collector 35, and second positive electrodes 44 including the positive-electrode current collector 35 provided with a large number of the through-holes 35a, and the second positive-electrode mixture layers 22 mounted on both surfaces of the positive-electrode current collector 35.

The negative electrode system has first negative electrodes 45 including the negative-electrode current collector 16 provided with a large number of the through-holes 16a, and the negative-electrode mixture layers 17 mounted on both surfaces of the negative-electrode current collector 16, and negative electrodes 46 including the negative-electrode current collector 16 provided with a large number of the through-holes 16a, and the negative-electrode mixture layer 17 mounted on one surface of the negative-electrode current collector 16.

These positive electrodes 43 and 44 and the negative electrodes 45 and 46 are alternately laminated with the separators 18 arranged therebetween. Specifically, the electric storage device 40 has a device structure of a laminated type.

Like the electric storage device 10 described above, the positive-electrode mixture layers 20 are formed to be thin so as to have a high output characteristic, while the positive-electrode mixture layers 22 are formed to be thick so as to have a high capacity characteristic.

Active carbon is contained in the positive-electrode mixture layers 20 and 22 as a positive-electrode active material, while PAS is contained in the negative-electrode mixture layers 17 as a negative-electrode active material.

The positive electrode terminal 23 is connected to the plurality of positive-electrode current collectors 35 that are connected to each other, while the negative electrode terminal 24 is connected to the plurality of negative-electrode current collectors 16 that are connected to each other.

A lithium ion source 47 is provided at the outermost part of the electrode laminate unit 42 so as to be opposite to the negative electrode 46. The lithium ion source 47 includes a lithium-electrode current collector 47a made of a conductive porous body such as a stainless mesh, and metal lithium 47b adhered onto the lithium-electrode current collector 47a. The negative-electrode current collector 16 and the lithium-electrode current collector 47a are short-circuited via a lead wire 48, whereby lithium ions are eluted from the metal lithium 47b and can be doped into the negative-electrode mixture layer 17 by injecting an electrolyte into the laminate film 11.

By doping lithium ions into the negative-electrode mixture layer 17, the potential of the negative electrode can be reduced to thereby increase the capacity of the electric storage device 40.

A large number of the through-holes 16a and 35a are formed in the negative-electrode current collector 16 and the positive-electrode current collector 35. Lithium ions can freely move between the electrodes via the through-holes 16a and 35a, whereby lithium ions can be doped all over the laminated negative-electrode mixture layers 17.

The metal lithium 47b decreases as eluting lithium ions, and finally, all amounts are doped into the negative-electrode mixture layers 17, but the metal lithium 47b may be provided in excess or a little too much, and some of the metal lithium 47b may be left in the electric storage device 40.

Instead of the metal lithium 47b, an alloy that can supply lithium ions, such as a lithium-aluminum alloy, may be used. Further, the lithium ion source 47 and the positive electrodes 43 and 44 may be short-circuited so as to dope the lithium ions into the positive electrodes 43 and 44.

As described above, the positive-electrode mixture layer 20 and the positive-electrode mixture layer 22, each having a different thickness, are electrically connected, and a large number of the through-holes 16a and 35a are formed in the negative-electrode current collector 16 and the positive-electrode current collector 35 arranged between the positive-electrode mixture layer 20 and the positive-electrode mixture layer 22, whereby anions and/or lithium ions can move between the positive-electrode mixture layer 20 and the positive-electrode mixture layer 22, like the electric storage device 10.

Consequently, the output density and the energy density of the electric storage device 40 can be enhanced, while ensuring the durability of the electric storage device 40. Further, the device structure of a laminated type is employed, so that several types of the electrodes can easily be combined, and hence, the fabrication of the electric storage device 40 is simplified.

Further, the thin positive-electrode mixture layer 20 is arranged at the central part of the positive electrode system, while the thick positive-electrode mixture layer 22 is arranged at the outermost part of the positive electrode system, whereby the cooling effect of the positive-electrode mixture layer 22, which has higher resistance compared to the positive-electrode mixture layer 20, can be enhanced, and hence, the deterioration of the electric storage device 40 can be suppressed.

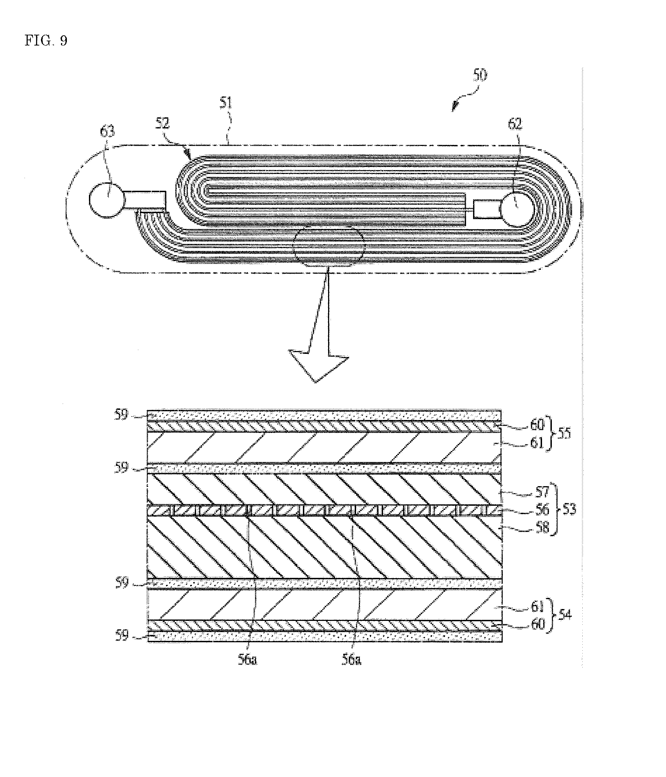

Next, another embodiment of the present invention will be explained. FIG. 9 is a sectional view schematically showing an internal structure of an electric storage device 50 of a wound type according to another embodiment of the present invention.

As shown in FIG. 9, an electrode wound unit 52 is arranged at the inside of a metal can 51 constituting an outer casing of the electric storage device 50. This electrode wound unit 52 includes a positive electrode system having one positive electrode 53 and a negative electrode system having two negative electrodes 54 and 55.

The positive electrode 53 provided at the central part of the electrode wound unit 52 includes a positive-electrode current collector (current collector) 56 provided with a large number of through-holes 56a, a first positive-electrode mixture layer 57 mounted on one surface of the positive-electrode current collector 56, and a second positive-electrode mixture layer 58 mounted on the other surface of the positive-electrode current collector 56 and formed to be thicker than the positive-electrode mixture layer 57. The first negative electrode 54 and the second negative electrode 55 are arranged through a separator 59 so as to sandwich the positive electrode 53.

Each of the negative electrodes 54 and 55 has a negative-electrode current collector (current collector) 60 and a negative-electrode mixture layer 61. Like the electric storage device 10 described above, the positive-electrode mixture layers 57 and 58 of the positive electrode 53 contain active carbon as a positive-electrode active material, and the negative-electrode mixture layer 61 of the negative electrodes 54 and 55 contain PAS as a negative-electrode active material.

Further, positive electrode terminal 62 is connected to the positive-electrode current collector 56 that connects the first positive-electrode mixture layer 57 and the second positive-electrode mixture layer 58, while a negative electrode terminal 63 is connected to the pair of the negative-electrode current collectors 60 that are connected to each other. The separator 59 adjacent to the negative-electrode current collector 60 may be omitted.

As described above, the positive-electrode mixture layer 57 and the positive-electrode mixture layer 58, each having a different thickness, are electrically connected, and a large number of the through-holes 56a are formed in the positive-electrode current collector 56 arranged between the positive-electrode mixture layer 57 and the positive-electrode mixture layer 58, whereby anions and/or lithium ions can move between the positive-electrode mixture layer 57 and the positive-electrode mixture layer 58, like the electric storage device 10.

Consequently, the output density and the energy density of the electric storage device 50 can be enhanced, while ensuring the durability of the electric storage device 50. Further, the device structure of a wound type is employed, with the result that the assembling process is simplified, and hence, the electric storage device 50 can be fabricated with low cost.

The components of each of the electric storage devices 10, 30, 40, and 50 will be explained in detail in the order described below: A = negative electrode, B = positive electrode, C = negative-electrode current collector and positive-electrode current collector, D = separator, E = electrolyte, and F = outer casing.

### A: Negative electrode

The negative electrode has a negative-electrode current collector and a negative-electrode mixture layer coated on the negative-electrode current collector, wherein a negative-electrode active material is contained in the negative-electrode mixture layer.

The negative-electrode active material is not particularly limited, so long as it allows ions to be reversibly doped thereinto and de-doped therefrom. Examples of the negative-electrode active material include a graphite, various carbon materials, a polyacene-based material, tin oxide, silicon oxide.

The graphite and the hard carbon material are preferable as the negative-electrode active material, since they can increase the capacity. Further, a polyacene-based organic semiconductor (PAS) that is a heat-treated material of an aromatic condensation polymer and has a polyacene skeletal structure in which a ratio of a number of hydrogen atoms (H) to a number of carbon atoms (C) is 0.05 or more and 0.50 or less is preferable for a negative-electrode active material, since it can increase the capacity.

It is preferable that the ratio H/C of the PAS is within the range of not less than 0.05 and not more than 0.50. When the ratio H/C of the PAS exceeds 0.50, the aromatic polycyclic structure is not sufficiently grown, so that the lithium ions cannot smoothly be doped or de-doped. Therefore, the charging/discharging efficiency of the electric storage device 10 can be decreased. When the H/C value of the PAS is less than 0.05, the capacity of the electric storage device can be decreased.

The negative-electrode active material such as PAS is formed into a powdery shape, a granular shape or a short fibrous shape. This negative-electrode active material is mixed with a binder to form a slurry. The slurry containing the negative-electrode active material is coated on the negative-electrode current collector and the resultant is dried, whereby the negative-electrode mixture layer is formed on the negative-electrode current collector.

Usable binders mixed with the negative-electrode active material include a fluorine-containing resin such as polytetrafluoroethylene, polyvinylidene fluoride, etc., a thermoplastic resin such as polypropylene, polyethylene, polyacrylate, etc, or a rubber binder such as styrene butadiene rubber (SBR). The fluorine-based binder is preferably used.

Examples of the fluorine-based binder include polyvinylidene fluoride, copolymer of vinylidene fluoride and trifluoroethylene, copolymer of ethylene and tetrafluoroethylene, copolymer of propylene and tetrafluoroethylene, etc. A conductive material such as acetylene black, graphite, a metal powder, etc. may appropriately be added to the negative-electrode mixture layer.

### B: Positive electrode

The positive electrode has a positive-electrode current collector and a positive-electrode mixture layer coated on the positive-electrode current collector. The positive-electrode mixture layer contains the positive-electrode active material. The positive-electrode active material is not particularly limited, so long as it allows ions to be reversibly doped thereinto and de-doped therefrom. Examples of the positive-electrode active materials include active carbon, transition metal oxides, conductive polymers, a polyacene-based substance.

The positive-electrode mixture layers are coated on the positive-electrode current collector with the thickness of each of the positive-electrode mixture layers changed, so that the first positive-electrode mixture layer and the second positive-electrode mixture layer having different charging/discharging characteristics are formed.

The active carbon contained in the positive-electrode mixture layers as the positive-electrode active material is made of active carbon grains that are subject to an alkali activation treatment and have a specific surface area of not less than 600 m²/g.

A phenolic resin, a petroleum pitch, a petroleum coke, a coconut husk, a coal-derived coke, etc. are used as the material of the active carbon, wherein it is preferable to use a phenolic resin or a coal-derived coke, since they can increase the specific surface area. Preferable alkali activators used for the alkali activation treatment of the active carbons include salts or hydroxides of a metal ion such as lithium, sodium, potassium, etc., wherein potassium hydroxide is more preferable.

Examples of the methods of the alkali activation include a method in which a carbide and an activator are mixed, and then, the resultant is heated in an airflow of an inert gas, a method in which an activator is carried on a raw material of an active carbon beforehand, the resultant is heated, and then, a carbonizing process and activating process are performed, a method in which a carbide is activated with a gas activation by using, for example, water vapors, and then, the resultant is surface-treated with an alkali activator.

The active carbon to which the alkali activation treatment is performed is pulverized by means of a known pulverizer such as a ball mill or the like. The grain size generally used within a wide range can be applied. For example, it is preferable that D₅₀ is 2 µm or more, more preferably 2 to 50 µm, and most preferably 2 to 20 µm.

Further, the active carbon preferably having an average pore diameter of 10 nm or less and a specific surface area of 600 to 3000 m²/g is preferable. More preferably, an active carbon having a specific surface area of 800 m²/g or more, particularly 1300 to 2500 m²/g is preferable.

For example, lithium cobalt oxide (LiCoO₂) may be contained in the positive-electrode mixture layers as the positive-electrode active material. Examples of the other materials include a lithium-containing metal oxide represented by a chemical formula of Li_{X}M_{Y}O_{Z} (wherein x, y, z are positive numbers, M is a metal, or may be metals of two or more types), such as Li_{X}CoO₂, Li_{X}NiO₂, Li_{X}MnO₂, Li_{X}FeO₂, a transition metal oxide such as a cobalt oxide, a manganese oxide, a vanadium oxide, a titanium oxide, or a nickel oxide, or a sulfide such as a cobalt sulfide, a manganese sulfide , a vanadium sulfide, a titanium sulfide, or a nickel sulfide.

In a case of requiring a high voltage, a lithium-containing oxide having a potential of 4 V or more with respect to metal lithium is preferably used. More preferable lithium-containing oxides include a lithium-containing cobalt oxide, a lithium-containing nickel oxide, or a lithium-containing cobalt-nickel compound oxide.

The positive-electrode active material described above such as lithium cobalt oxide or the above described active carbon is formed into a powdery shape, a granular shape, a short fibrous shape, etc., and this positive-electrode active material is mixed with a binder to form a slurry.

The slurry containing the positive-electrode active material is coated on the positive-electrode current collector and the resultant is dried, whereby the positive-electrode mixture layer is formed on the positive-electrode current collector.

Usable binders mixed with the positive-electrode active material include a rubber binder such as SBR, a fluorine-containing resin such as polytetrafluoroethylene, polyvinylidene fluoride, a thermoplastic resin such as polypropylene, polyethylene, polyacrylate.

A conductive material such as acetylene black, graphite, a metal powder may appropriately be added to the positive-electrode mixture layer. A dispersant or a thickener may be added as needed, and for example carboxymethyl cellulose may be added.

### C: Negative-electrode current collector and positive-electrode current collector

The negative -electrode current collector and the positive -electrode current collector preferably have through holes penetrating therethrough. Examples thereof include an expanded metal, a punched metal, a net, an expanded member. The shape and number of the through hole are not particularly limited, and they are appropriately set so long as they do not hinder the movement of the anions and/or lithium ions.

Various materials generally proposed for an organic electrolyte battery can be employed as the material of the negative-electrode current collector and the positive-electrode current collector. For example, stainless steel, copper, nickel, etc. can be used as the material of the negative-electrode current collector, and aluminum, stainless steel or the like can be used as the material of the positive-electrode current collector.

In the electric storage device 10 shown in FIG. 1, the positive-electrode current collectors 19 and 21 are not arranged between the positive-electrode mixture layer 20 and the positive-electrode mixture layer 22, so that the electric storage device 10 can be used without forming through-holes on the positive-electrode current collectors 19 and 21.

In the electric storage device 30 shown in FIG. 7, the negative-electrode current collector 36 is not arranged between the positive-electrode mixture layer 20 and the positive-electrode mixture layer 22, so that the electric storage device 30 can be used without forming through-holes in the negative-electrode current collector 36.

### D: Separator

A porous member or the like having the durability with respect to the electrolyte, positive-electrode active material, negative-electrode active material, or the like, having a through hole and having no electron conductivity can be used for the separator. Generally, a cloth, a nonwoven fabric, or a porous body made of a paper (cellulose), a glass fiber, a polyethylene, a polypropylene, etc. is used.

The thickness of the separator is preferably thin in order to reduce the internal resistance of the battery, but it may appropriately be set considering the holding amount of the electrolyte, strength of the separator, or the like.

### E: Electrolyte

It is preferable that an aprotic organic solvent containing a lithium salt is used for the electrolyte from the viewpoint that an electrolysis is not produced even by a high voltage and lithium ions can stably be present. Examples of the aprotic organic solvent include ethylene carbonate, propylene carbonate, dimethyl carbonate, diethyl carbonate, γ-butyloractone, acetonitrile, dimethoxyethane, tetrahydrofuran, dioxolane, methylene chloride, sulfolane, wherein these material are used singly or mixed with one another.

Examples of the lithium salt include LiClO₄, LiAsF₆, LiBF₄, LiPF₆, LIN(C₂F₅SO₂)₂. Further, the concentration of the electrolyte in the electrolyte solution is preferably set to at least 0.1 mol/l, and more preferably set within a range of 0.5 to 1.5 mol/l, in order to reduce the internal resistance due to the electrolyte solution.

### F: Outer casing

Various materials generally used for a battery can be used for the outer casing. A metal material such as iron or aluminum may be used, and a film material or the like may be used. The shape of the outer casing is not particularly limited. The outer casing may be formed into a shape appropriately selected according to the purpose, such as a cylindrical shape or a rectangular shape.

From the viewpoint of the miniaturization or the reduction in weight of the electric storage device, it is preferable to use a film-type outer casing employing an aluminum laminate film. In general, a three-layered laminate film having a nylon film at the outer part, an aluminum foil at the middle part, and an adhesive layer such as a denatured polypropylene at the inner part is used.

The present invention will be explained in detail with reference to Examples.

### EXAMPLES

### EXAMPLE 1

### Fabrication of negative electrode 1

A furfuryl alcohol, which was a raw material of a furan resin, was retained at 60 °C for 24 hours so as to cure the furfuryl alcohol, to thereby obtain a black resin. The obtained black resin was put into a stationary electric furnace, and heat-treated for 3 hours under a nitrogen atmosphere till the temperature reached 1200°C. The black resin was retained at 1200°C for 2 hours . The sample taken out after the cooling was pulverized by means of a ball mill to obtain a hard carbon powder (D₅₀ = 5.0 µm, hydrogen atom/carbon atom = 0.008) as a Sample 1.

Then, 100 parts by weight of the above Sample 1 and a solution formed by dissolving 10 parts by weight of polyvinylidene fluoride powder in 80 parts by weight of N-methyl pyrrolidone were sufficiently mixed to obtain a slurry 1 for a negative electrode. The slurry 1 for a negative electrode was coated uniformly over both surfaces of a copper expanded metal (manufactured by Nippon Metal Industry Co., Ltd.) having a thickness of 32 µm (a porosity of 50%) by a die coater, and dried and pressed, whereby a negative electrode 1 with a thickness of 67 µm was produced.

### Fabrication of positive electrode 1 and 2

85 parts by weight of commercially available active carbon powder with a specific surface area of 2000 m²/g, 5 parts by weight of acetylene black powder, 6 parts by weight of acrylic resin binder, 4 parts by weight of carboxyl methyl cellulose, and 200 parts by weight of water were fully mixed to obtain a slurry for a positive electrode.

Both surfaces of an aluminum expanded metal having a thickness of 35 µm (porosity of 50%) was coated with a non-aqueous carbon conductive coating by a spraying method, and dried thereby to obtain a positive-electrode current collector having a conductive layer thereon. The total thickness (the sum of the current collector thickness and the conductive layer thickness) of the positive-electrode current collector was 52 µm, and most of the through-holes of the positive-electrode current collector were filled with the conductive coating.

The slurry for a positive electrode was uniformly applied over both surfaces of the two positive-electrode current collectors by means of a roll coater, and dried and pressed to produce a positive electrode 1 having a thickness of 129 µm and a positive electrode 2 having a thickness of 404 µm.

The thickness of the positive-electrode mixture layer formed on the positive electrode 1 was 77 µm, and the area density of the positive-electrode active material was 3.5 mg/cm². The thickness of the positive-electrode mixture layer formed on the positive electrode 2 was 352 µm, and the area density of the positive-electrode active material was 16.0 mg/cm².

### Fabrication of electrode laminate unit 1

The negative electrode 1 was cut out into eight pieces, each having an area of 6.0 cm x 7.5 cm (excluding the terminal welding parts), the positive electrode 1 was cut out into five pieces, each having an area of 5.8 cm x 7.3 cm (excluding the terminal welding parts), and the positive electrode 2 was cut out into two pieces, each having an area of 5.8 cm x 7.3 cm (excluding the terminal welding parts).

The positive electrodes 1 and 2, and the negative electrode 1 were alternately laminated through a separator of a nonwoven fabric made of polyethylene with a thickness of 35 µm in a manner that the terminal welding parts of the positive-electrode current collectors and the negative-electrode current collectors were set in the opposite side.

The two negative electrodes 1 were the outermost electrodes of the electrode laminate unit 1. Then, separators were arranged at the uppermost part and the lowermost part, and the four sides of the structure were fastened with a tape.

The terminal welding parts (seven sheets) of the positive-electrode current collectors were ultrasonically welded to an aluminum positive electrode terminal (having a width of 50 mm, a length of 50 mm, a thickness of 0.2 mm), and the terminal welding parts (eight sheets) of the negative-electrode current collectors were ultrasonically welded to a copper negative electrode terminal (having a width of 50 mm, a length of 50 mm, a thickness of 0.2 mm), thereby to obtain an electrode laminate unit 1.

### Fabrication of cell 1

A lithium electrode was formed by pressing a metal lithium foil onto a stainless steel mesh with a thickness of 80 µm. The two lithium electrodes were located one by one on the upper part and the lower part of the electrode laminate unit 1 such that it exactly faces the negative electrode 1, whereby a three-electrode laminate unit was fabricated. The terminal welding parts (two sheets) of the stainless steel, which is the lithium-electrode current collector, were resistance-welded to the negative electrode terminal welding parts.

The three-electrode laminate unit was placed in a laminate film deep-drawn to 3.5 mm, and the opening portion was covered with other laminate film and three sides were heat-sealed. Then, the unit was vacuum-impregnated with an electrolyte solution (a solution formed by dissolving LiPF₆ at 1 mol/L into propylene carbonate). Then, the remaining one side of the unit was heat-sealed.

Accordingly, four cells 1 having the positive electrode 1 including the positive-electrode mixture layer with a thickness of 77 µm, and the positive electrode 2 including the positive-electrode mixture layer with a thickness of 352 µm, in which the positive-electrode current collector and negative-electrode current collector (expanded metal) provided with through-holes were arranged between the positive-electrode mixture layers of the positive electrode 1 and those of the positive electrode 2. The metal lithium located in each cell 1 was equivalent to 500 mAh/g per negative-electrode active material weight.

### Initial evaluation of cell 1

The thus assembled hybrid cells 1 were left to stand for 20 days, and one cell of four cells was disassembled. It was confirmed that no metal lithium remained. From this fact, it was considered that the amount of lithium ion equivalent to 500 mAh/g per negative-electrode active material weight was pre-doped.

### Characteristic evaluation of cell 1

The cell 1 was charged for thirty minutes by a constant current-constant voltage charging method in which it was charged at a constant current of 1500 mA till the cell voltage reached 3.8 V and then was charged at a constant voltage of 3.8 V. Then, the cell was discharged at a constant current of 150 mA till the cell voltage reached 2.2 V.

The cycle of the charging operation to 3.8 V and the discharging operation to 2.2 V (150 mA discharge) was repeated, and when the cycle was repeated 10 times, the capacity and the energy density of the cell were evaluated.

Subsequently, the cell was charged in a similar way, and was discharged at a constant current of 75 A till the cell voltage reached 2.2 V. The cycle of the charging operation to 3.8 V and the discharging operation to 2.2 V (75 A discharge) was repeated, and when the cycle was repeated 10 times, the capacity of the cell was evaluated. The results of the evaluation are shown in Table 1 together with a capacity retention ratio at high load. Numerical data in Table 1 are the average values of three cells.

**Table 1**

| | Example 1 |
|---|---|
| Cell capacity | 123 |
| (150 mA discharge) | |
| [mAh] | |
| Energy density | 21.3 |
| (Wh/l) | |
| Cell capacity | 27.7 |
| (75 A discharge) | |
| [mAh] | |
| Capacity retention ratio | 22.5 |
| (%) | |

### Example 2

### Fabrication of positive electrode 3

The slurry for a positive electrode used in the Example 1 was uniformly applied over both surfaces of the positive-electrode current collector by means of a roll coater, dried, and pressed to produce a positive electrode 3 having a thickness of 268 µm.

The total thickness of the positive-electrode mixture layers of the positive electrode 3 on both surfaces was 216 µm, in which the thickness of the positive-electrode mixture layer formed on one surface of the positive-electrode current collector was 39 µm, while the thickness of the positive-electrode mixture layer formed on the other surface of the positive-electrode current collector was 177 µm.

Specifically, the positive-electrode mixture layers, each having a different thickness, were formed on one surface and the other surface of the positive-electrode current collector. The area density of the positive-electrode active material was 9.8 mg/cm².

### Fabrication of electrode laminate unit 2

The negative electrode 1 was cut out into eight pieces, each having an area of 6.0 cm x 7.5 cm (excluding the terminal welding parts), and the positive electrode 3 was cut out into seven pieces, each having an area of 5.8 cm x 7.3 cm (excluding the terminal welding parts). The electrode laminate unit 2 was fabricated in the same manner as in the Example 1, except that the positive electrode 2 having the positive-electrode mixture layer with a thickness of 39 µm and the positive-electrode mixture layer with a thickness of 177 µm was used.

### Fabrication of cell 2

Four cells 2 were assembled in the same manner as in the Example 1 by using the electrode laminate unit 2. The metal lithium located in each cell 2 was equivalent to 500 mAh/g per negative-electrode active material weight.

### Initial evaluation of cell 2

The thus assembled cells 2 were left to stand for 20 days, and one cell of four cells 2 was disassembled. It was confirmed that no metal lithium remained. From this fact, it was considered that the amount of lithium ion equivalent to 500 mAh/g per negative-electrode active material weight was pre-doped.

### Characteristic evaluation of cell 2

The cell 2 was charged for thirty minutes by a constant current-constant voltage charging method in which it was charged at a constant current of 1500 mA till the cell voltage reached 3.8 V and then was charged at a constant voltage of 3.8 V. Then, the cell was discharged at a constant current of 150 mA till the cell voltage reached 2.2 V.

The cycle of the charging operation to 3.8 V and the discharging operation to 2.2 V (150 mA discharge) was repeated, and when the cycle was repeated 10 times, the capacity and the energy density of the cell were evaluated. Subsequently, the cell was charged in a similar way, and was discharged at a constant current of 75 A till the cell voltage reached 2.2 V.

The cycle of the charging operation to 3.8 V and the discharging operation to 2.2 V (75 A discharge) was repeated, and when the cycle was repeated 10 times, the capacity of the cell was evaluated. The results of the evaluation are shown in Table 2 together with a capacity retention ratio at high load. Numerical data in Table 2 are the average values of three cells.

**Table 2**

| | Example 2 |
|---|---|
| Cell capacity | 167 |
| (150 mA discharge) | |
| [mAh] | |
| Energy density | 25.6 |
| (Wh/l) | |
| Cell capacity | 44.1 |
| (75 A discharge) | |
| [mAh] | |
| Capacity retention ratio | 26.4 |
| (%) | |

### Comparative Example 1

### Fabrication of electrode laminate unit 3

The negative electrode 1 was cut out into eight pieces, each having an area of 6.0 cm x 7.5 cm (excluding the terminal welding parts), and the positive electrode 1 was cut out into seven pieces, each having an area of 5.8 cm x 7.3 cm (excluding the terminal welding parts). The electrode laminate unit 3 was fabricated in the same manner as in the Example 1, except that the positive electrode 1 having the positive-electrode mixture layer with a thickness of 77 µm was used.

### Fabrication of cell 3

Four cells 3 were assembled in the same manner as in the Example 1 by using the electrode laminate unit 3. The metal lithium located in each cell 3 was equivalent to 500 mAh/g per negative-electrode active material weight.

### Initial evaluation of cell 3

The thus assembled cells 3 were left to stand for 20 days, and one cell of four cells 3 was disassembled. It was confirmed that no metal lithium remained. From this fact, it was considered that the amount of lithium ion equivalent to 500 mAh/g per negative-electrode active material weight was pre-doped.

### Characteristic evaluation of cell 3

The cell 3 was charged for thirty minutes by a constant current-constant voltage charging method in which it was charged at a constant current of 1500 mA till the cell voltage reached 3.8 V and then was charged at a constant voltage of 3.8 V. Then, the cell was discharged at a constant current of 150 mA till the cell voltage reached 2.2 V.

The cycle of the charging operation to 3.8 V and the discharging operation to 2.2 V (150 mA discharge) was repeated, and when the cycle was repeated 10 times, the capacity and the energy density of the cell were evaluated. Subsequently, the cell was charged in a similar way, and was discharged at a constant current of 75 A till the cell voltage reached 2.2 V.

The cycle of the charging operation to 3.8 V and the discharging operation to 2.2 V (75 A discharge) was repeated, and when the cycle was repeated 10 times, the capacity of the cell was evaluated. The results of the evaluation are shown in Table 3 together with a capacity retention ratio at high load. Numerical data in Table 3 are the average values of three cells.

**Table 3**

| | Comparative Example 1 |
|---|---|
| Cell capacity | 63 |
| (150 mA discharge) | |
| [mAh] | |
| Energy density | 13.0 |
| (Wh/l) | |
| Cell capacity | 23.1 |
| (75 A discharge) | |
| [mAh] | |
| Capacity retention ratio | 36.7 |
| (%) | |

### Comparative Example 2

### Fabrication of electrode laminate unit 4

The negative electrode 1 was cut out into eight pieces, each having an area of 6.0 cm x 7.5 cm (excluding the terminal welding parts), and the positive electrode 2 was cut out into seven pieces, each having an area of 5.8 cm x 7.3 cm (excluding the terminal welding parts). The electrode laminate unit 4 was fabricated in the same manner as in the Example 1, except that the positive electrode 2 having the positive-electrode mixture layer with a thickness of 352 µm was used.

### Fabrication of cell 4

Four cells 4 were assembled in the same manner as in the Example 1 by using the electrode laminate unit 4. The metal lithium located in each cell 4 was equivalent to 500 mAh/g per negative-electrode active material weight.

### Initial evaluation of cell 4

The thus assembled cells 4 were left to stand for 20 days, and one cell of four cells 4 was disassembled. It was confirmed that no metal lithium remained. From this fact, it was considered that the amount of lithium ion equivalent to 500 mAh/g per negative-electrode active material weight was pre-doped.

### Characteristic evaluation of cell 4

The cell 4 was charged for thirty minutes by a constant current-constant voltage charging method in which it was charged at a constant current of 1500 mA till the cell voltage reached 3.8 V and then was charged at a constant voltage of 3.8 V. Then, the cell was discharged at a constant current of 150 mA till the cell voltage reached 2.2 V.

The cycle of the charging operation to 3.8 V and the discharging operation to 2.2 V (150 mA discharge) was repeated, and when the cycle was repeated 10 times, the capacity and the energy density of the cell were evaluated. Subsequently, the cell was charged in a similar way, and was discharged at a constant current of 75 A till the cell voltage reached 2.2 V.

The cycle of the charging operation to 3.8 V and the discharging operation to 2.2 V (75 A discharge) was repeated, and when the cycle was repeated 10 times, the capacity of the cell was evaluated. The results of the evaluation are shown in Table 4 together with a capacity retention ratio at high load. Numerical data in Table 4 are the average values of three cells.

**Table 4**

| | Comparative Example 2 |
|---|---|
| Cell capacity | 261 |
| (150 mA discharge) | |
| [mAh] | |
| Energy density | 31.9 |
| (Wh/l) | |
| Cell capacity | 37.9 |
| (75 A discharge) | |
| [mAh] | |
| Capacity retention ratio | 14.5 |
| (%) | |

### Comparison of Example 1 Example 2 Comparative Example 1, and Comparative Example 2

The cells 1 and 2 according to the Examples 1 and 2 include the positive-electrode mixture layer that is formed to be thin so as to have a high output characteristic, and the positive-electrode mixture layer that is formed to be thick so as to have an increased capacity. Therefore, it was confirmed from Tables 1 and 2 that the cells 1 and 2 according to the Examples 1 and 2 had a high energy density and a high capacity at a high load.

On the other hand, the cell 3 according to the Comparative Example 1 includes only the positive electrode 1 in which the positive-electrode mixture layer is formed to be thin so as to have an increased output characteristic. Therefore, it was confirmed from Table 3 that the cell 3 had a high capacity (capacity retention ratio) at a high load, but the energy density was low. It was considered that this is because the amount of the active material with respect to the volume of the whole cell was small since all positive electrodes 1 includes thin positive-electrode mixture layers.

Since the cell 4 in the Comparative Example 2 includes only the positive electrodes 2 in which the positive-electrode mixture layers are formed to be thick so as to have an increased discharge capacity, the energy density was high, but the cell capacity (capacity retention ratio) at a high load was low. It was considered that this is because the capacity could not be extracted at a high load since the positive electrodes 2, having the positive-electrode mixture layers formed to be thick, had a high resistance.

### Example 3

### Fabrication of positive electrodes 4 and 5

92 parts by weight of commercially available LiCoO₂ powder, 4.5 parts by weight of graphite powder, and 3.5 parts by weight of polyvinylidene fluoride (PVdF) powder were mixed, and then, N-methyl pyrrolidone was added thereto. The resultant was thoroughly stirred and defoamed, whereby a slurry 2 for a positive electrode was obtained.

The slurry 2 for a positive electrode was uniformly applied over both surfaces of the two positive-electrode current collectors by means of a roll coater, and dried and pressed to produce a positive electrode 4 having a thickness of 169 µm and a positive electrode 5 having a thickness of 95 µm.

### Fabrication of electrode laminate unit 5

The negative electrode 1 was cut out into eight pieces, each having an area of 6.0 cm x 7.5 cm (excluding the terminal welding parts), the positive electrode 4 was cut out into two pieces, each having an area of 5.8 cm x 7.3 cm (excluding the terminal welding parts), and the positive electrode 5 was cut out into five pieces, each having an area of 5.8 cm x 7.3 cm (excluding the terminal welding parts). The electrode laminate unit 5 was fabricated in the same manner as in the Example 1 except that the positive electrodes 4 and 5 containing a lithium cobalt oxide were used.

### Fabrication of cell 5

Four cells 5 were assembled in the same manner as in the Example 1 by using the electrode laminate unit 5 except that the lithium electrode was not provided.

### Characteristic evaluation of cell 5

The cell 5 was charged for twelve hours by a constant current-constant voltage charging method in which it was charged at a constant current of 500 mA till the cell voltage reached 4.2 V and then was charged at a constant voltage of 4.2 V. Then, the cell was discharged at a constant current of 50 mA till the cell voltage reached 3.0 V.

The cycle of the charging operation to 4.2 V and the discharging operation to 3.0 V (50 mA discharge) was repeated, and when the cycle was repeated 10 times, the capacity and the energy density of the cell were evaluated. Subsequently, the cell was charged in a similar way, and was discharged at a constant current of 5 A till the cell voltage reached 3.0 V.

The cycle of the charging operation to 4.2 V and the discharging operation to 3.0 V (5 A discharge) was repeated, and when the cycle was repeated 10 times, the capacity of the cell was evaluated. The results of the evaluation are shown in Table 5 together with a capacity retention ratio at high load. Numerical data in Table 5 are the average values of four cells.

**Table 5**

| | Example 3 |
|---|---|
| Cell capacity | 572 |
| (50 mA discharge) | |
| [mAh] | |
| Energy density | 147 |
| (Wh/l) | |
| Cell capacity | 267 |
| (5 A discharge) | |
| [mAh] | |
| Capacity retention ratio | 46.7 |
| (%) | |

### Comparative Example 3

### Fabrication of electrode laminate unit 6

The negative electrode 1 was cut out into eight pieces, each having an area of 6.0 cm x 7.5 cm (excluding the terminal welding parts), and the positive electrode 4 was cut out into seven pieces, each having an area of 5.8 cm x 7.3 cm (excluding the terminal welding parts). The electrode laminate unit 6 was fabricated in the same manner as in the Example 3, except that the positive electrode 4 containing a lithium cobalt oxide was used for the positive electrode.

### Fabrication of cell 6

Four cells 6 were assembled in the same manner as in the Example 3 by using the electrode laminate unit 6.

### Characteristic evaluation of cell 6

The cell 6 was charged for twelve hours by a constant current-constant voltage charging method in which it was charged at a constant current of 500 mA till the cell voltage reached 3.9 V and then was charged at a constant voltage of 3.9 V. Then, the cell was discharged at a constant current of 50 mA till the cell voltage reached 3.0 V.

The cycle of the charging operation to 3.9 V and the discharging operation to 3.0 V (50 mA discharge) was repeated, and when the cycle was repeated 10 times, the capacity and the energy density of the cell were evaluated. Subsequently, the cell was charged in a similar way, and was discharged at a constant current of 5 A till the cell voltage reached 3.0 V.

The cycle of the charging operation to 3.9 V and the discharging operation to 3.0 V (5 A discharge) was repeated, and when the cycle was repeated 10 times, the capacity of the cell were evaluated. The results of the evaluation are shown in Table 6 together with a capacity retention ratio at high load. Numerical data in Table 6 are the average values of four cells.

**Table 6**

| | Comparative Example 3 |
|---|---|
| Cell capacity | 734 |
| (50 mA discharge) | |
| [mAh] | |
| Energy density | 157 |
| (Wh/l) | |
| Cell capacity | 184 |
| (5 A discharge) | |
| [mAh] | |
| Capacity retention ratio | 25.1 |
| (%) | |

### Comparison of Example 3, and Comparative Example 3

The cell 5 according to the Example 3 includes the positive electrode 4 in which the positive-electrode mixture layer is formed to be thick so as to enhance a discharge capacity, and the positive electrode 5 in which the positive-electrode mixture layer is formed to be thin so as to enhance an output characteristic.

Therefore, it was confirmed from Tables 5 that the cell 5 according to the Example 3 had a high energy density and a high capacity at a high load. On the other hand, the cell 6 according to the Comparative Example 3 includes only the positive electrode 4 in which the positive-electrode mixture layer is formed to be thick so as to enhance a discharge capacity.

Therefore, it was confirmed from Table 6 that the cell 6 had a high energy density, but the cell capacity (capacity retention ratio) at a high load was low. It was considered that this is because the capacity could not be extracted at a high load since the positive electrodes 4, having the positive-electrode mixture layers formed to be thick, had a high resistance.

### Comparative Example 4

### Fabrication of cell 7

Four cells 7 were assembled in the same manner as in the Example 3, except that an aluminum foil having no through-holes was used as a positive-electrode current collector, and a copper foil having no through-holes was used as a negative-electrode current collector.

### Characteristic evaluation of cell 7

The cell 7 was charged for twelve hours by a constant current-constant voltage charging method in which it was charged at a constant current of 500 mA till the cell voltage reached 4.2 V and then was charged at a constant voltage of 4.2 V.

Subsequently, the cell was discharged at a constant current of 50 mA till the cell voltage reached 3.0 V. The cycle of the charging operation to 4.2 V and the discharging operation to 3.0 V (50 mA discharge) was repeated, and when the cycle was repeated 6 times, the cell 7 was short-circuited, so that the test was ended.

### Examination of Comparative Example 4

It was considered that, when the cell 7 according to the Comparative Example 4 was charged till the cell voltage reached 4.2 V, the metal lithium was deposited onto the surface of the negative electrode, and hence, the cell 7 was short-circuited, since excessive lithium ions were doped into the negative electrode opposite to the positive electrode 4. On the other hand, if the through-holes are formed in the current collector, the ions can move between each electrode, as shown in Example 3.

Therefore, it was considered that, if the through-holes were formed in the current collector, the potentials of the positive electrodes were adjusted to be the same and the potentials of the negative electrodes were adjusted to be the same, so that the load on the negative electrodes became uniform, and the metal lithium could not be deposited.

The present invention is not limited to the above embodiments, and various modifications are possible without departing from the scope of the present invention. For example, in the illustrated electric storage devices 10, 30, 40, and 50, two positive-electrode mixture layers 20 and 22, 57 and 58, each having a different thickness, are connected to each other, and the through-holes 16a, 35a, and 56a are formed on the negative-electrode current collector 16 or the positive-electrode current collectors 35 and 56 arranged between the positive-electrode mixture layers 20 and 22, 57 and 58.

However, the invention is not limited thereto. Three or more positive-electrode mixture layers, each having a different thickness, may be connected to one another, and the through-holes may be formed in the negative-electrode current collector and the positive-electrode current collector arranged between these positive-electrode mixture layers.

The positive-electrode active material and the negative-electrode active material are not limited to the above active materials. Various active materials used for a conventional battery or a capacitor are applicable. Further, various electrolytes and separators used for a conventional battery or a capacitor can also be used for the electrolyte and the separator 18.

The electric storage device according to the present invention is highly effective as a driving storage power source or an auxiliary storage power source for an electric vehicle, a hybrid vehicle, or the like. Further, the electric storage device according to the present invention is well adaptable to a driving storage power source for an electric bicycle, a motorized wheelchair, or the like, a storage power source used in a photovoltaic power generating device or a wind power generating device, or a storage power source used in a portable device or an electric appliance.

## Claims

1. An electric storage device comprising:
- a positive electrode system (13, 14, 19, 20, 22) including a positive electrode (13, 14) having a current collector (19) and a positive-electrode mixture layer (20, 22),
- a negative electrode system (15, 16, 17) including a negative electrode (15) including a current collector (16) and a negative-electrode mixture layer (17),
wherein the positive electrode system includes a first positive-electrode mixture layer (20) and a second positive-electrode mixture layer (22), the first positive-electrode mixture layer (20) and the second positive-electrode mixture layer (22) being connected to each other, and having a different thickness, and a through-hole (16a) is formed in the current collector (16) arranged between the first positive-electrode mixture layer (20) and the second positive-electrode mixture layer (22).

2. The device according to claim 1,
wherein the first positive-electrode mixture layer (20) and the second positive-electrode mixture layer (22) are electrically connected, and ions move between the first positive-electrode mixture layer (20) and the second positive-electrode mixture layer (22) via the through-hole (16a).

3. The device according to claim 1 or 2,
wherein the first positive-electrode mixture layer (20) and the second positive-electrode mixture layer (22) are formed by using same materials.

4. The device according to any one of claims 1 to 3,
wherein both of the first positive-electrode mixture layer (20) and the second positive-electrode mixture layer (22) contain active carbon.

5. The device according to any one of claims 1 to 4,
wherein the positive electrode system includes a first positive electrode (13) and a second positive electrode (14) that sandwich the negative electrode (15), and the through-hole (16a) is formed in the current collector (16) of the negative electrode (15) arranged between the first positive-electrode mixture layer (20) of the first positive electrode (13) and the second positive-electrode mixture layer (22) of the second positive electrode (14).

6. The device according to any one of claims 1 to 4,
wherein the negative electrode system includes a first negative electrode (33) and a second negative electrode (34) that sandwich the positive electrode (32), and the through-hole (35a) is formed in the current collector (35) of the positive electrode (32) having the first positive-electrode mixture layer (20) on its one surface and the second positive-electrode mixture layer (22) on its other surface.

7. The device according to any one of claims 1 to 6, comprising:
a lithium ion source (47) that is in contact with at least one of the negative electrode (45, 46) and the positive electrode (43, 44),
wherein lithium ions are doped from the lithium ion source (47) into at least one of the negative electrode (45, 46) and the positive electrode (43, 44).

8. The device according to any one of claims 1 to 7,
having a device structure of a laminated type in which the positive electrode (53) and the negative electrode (54, 55) are alternately laminated, or
a device structure of a wound type in which the positive electrode (53) and the negative electrode (54, 55) are laminated and wound.

9. The device according to any one of claims 1 to 8,
wherein the negative-electrode mixture layer contains a polyacene-based organic semiconductor, which is a heat-treated material of an aromatic condensation polymer and has a polyacene skeletal structure in which a ratio H/C of a number of hydrogen atoms H to a number of carbon atoms C is 0.05 or more and 0.50 or less, graphite, or hard carbon.
